# EUROPEAN PATENT SPECIFICATION

(11) **EP 2 285 591 B1**
(45) Date of publication and mention of the grant of the patent: **01.02.2012**
(21) Application number: 08759754.8
(22) Date of filing: 19.05.2008
(51) Int. Cl.: B60B 27/00, F16C 33/78, F16D 3/223, F16J 15/32

(54) **DEVICE COMPRISING A WHEEL HUB AND A CONSTANT-VELOCITY ROTARY JOINT**
EINE RADNABE UND EIN GLEICHLAUFDREHGELENK UMFASSENDE VORRICHTUNG
DISPOSITIF COMPRENANT UN MOYEU DE ROUE ET UN JOINT ROTATIF À VITESSE CONSTANTE

(43) Date of publication of application: 23.02.2011
(73) Proprietor: GKN Driveline Deutschland GmbH, 63073 Offenbach Am Main (DE)
(72) Inventor: CERMAK, Herbert, 63856 Bessenbach (DE)
(74) Representative: Rössler, Matthias
(86) International application number: PCT/EP2008/056131
(87) International publication number: WO 2009/140996

(56) References cited:
- EP-A- 0 936 086
- WO-A-2007/054189
- WO-A-2008/006339

## Description

The present invention relates to a device comprising at least one wheel hub with a flange section and a sleeve section, and a constant-velocity rotary joint having at least one joint outer part, a joint inner part and torque-transmitting elements according to the preamble of claim 1 and as it is disclosed in WO2002006339A. In this device, the wheel hub and the constant-velocity rotary joint are coupled to each other via a common spur toothing. The invention is used in particular in the drive train of a motor vehicle.

Devices of this type are revealed, for example, in WO 2007/054189 A1 and WO 2007/054190 A1. These in particular describe a wheel hub/rotary joint arrangement for connecting the wheel-side rotary joint of a side shaft of a motor vehicle to the wheel hub held by a vehicle-side wheel carrier. In this case, the wheel hub comprises a sleeve section for receiving a wheel mounting, which, for its part, is held in the wheel carrier of the motor vehicle body, and a flange section for the bolting-on of a wheel, i.e. in particular, of the central wheel disk.

In the case of devices of this type, the joint outer part and the wheel hub are generally connected to each other, in particular clamped to each other. For this purpose, the joint outer part can be designed, for example, with a bore which has an internal toothing and into which a corresponding bolt is screwed through the wheel hub. The wheel hub and the joint outer part are therefore clamped axially. It is thus ensured that the spur toothing of the wheel hub engages securely and permanently in the joint outer part via the spur toothing and consequently a reliable transmission of torque is ensured. With regard to the configuration of the wheel hub, the constant-velocity joint and/or the spur toothing, recourse can be made in particular to the disclosure content of the two above-mentioned international patent publications, the subject matter of which to this extent is fully incorporated here with the subject matter of the present application.

Even though the above-described construction has already proven suitable for daily use, particularly adverse circumstances which put the satisfactory operation of a device of this type at risk may occur. In particular, severe weather effects and the tendency of the components used to corrode should be taken into consideration in this case. Due to their proximity to the roadway, the above mentioned components are exposed to a particularly great extent to the external weather conditions, with the materials, which are predominantly metallic here, also sometimes being exposed to corrosion. In addition, it should be taken into consideration that a magnetic transmitter ring for an antilock system (ABS) may also be arranged in the region of the wheel hub or of the constant-velocity rotary joint, and therefore, due to said magnetic effect, an increased accumulation of rust particles could be a cause for concern here. There is therefore the risk of such rust particles accumulating right in the region of the device, even if it has been assumed to date that such an "encapsulated system" is already sufficiently protected.

It is the object of the present invention to at least partially solve the problems outlined with regard to the prior art. In particular, the intention is to provide a device in which, even in the event of an increased tendency of the components of the device to corrode, a reliable transmission of torque is ensured. The intention here in particular is to provide protection for the spur toothing, with which protection the requirements with regard to cost-effective use, simple installation or a long service life of the said protection are equally achieved. This shall in particular apply to arrangements wherein a magnetic transmitter ring of the antilock system (ABS) is located on the wheel-bearing inner ring of a wheel-bearing.

These objects are achieved by a device according to the features of patent claim 1. Further advantageous refinements and uses of the invention are indicated in the dependently formulated patent claims. The description, in particular in conjunction with the figures, further explains the invention and indicates additional, particularly preferred, variant embodiments of the invention.

The device comprises at least one wheel hub with a flange section and a sleeve section, and a constant-velocity rotary joint having at least one joint outer part, a joint inner part and torque-transmitting elements, wherein the wheel hub and the constant-velocity rotary joint are coupled to each other via a spur toothing, and the spur toothing is surrounded radially on the outside by a flexible seal.

The invention is used in this respect in particular in the arrangements mentioned at the beginning, and therefore, in order to explain the individual components and the action thereof with regard to the transmission of torque, additional information, if appropriate, may also be obtained from the two international patent publications of the applicant (WO 2007/054189 A1 and WO 2007/054190 A1). Those details which are disclosed there with regard to said technical fields are fully incorporated here.

In principle, use may be made here of any known type of constant-velocity rotary joint, with it being possible, in particular, also for the type and/or number of torque-transmitting elements (balls or the like) and, if appropriate, also the type and/or design of the guide tracks for said torque-transmitting elements to be adapted in a manner corresponding to the requirements. It is very particularly preferred for the constant-velocity rotary joint to be designed as a fixed joint (in particular the Rzeppa type; if appropriate, a fixed joint with ball tracks opening in opposite directions in an alternating manner), though, in principle, sliding joints (which permit axial displacement of joint inner part and joint outer part during operation) can equally be used. The design of the joint outer part is of major significance for the connection to the wheel hub because the toothing for the spur toothing is formed here in a plane essentially perpendicular to the axis of the constant-velocity rotary joint. If appropriate, the joint outer part can be designed with at least one receptacle (bore, thread, etc.) in which clamping means (journal, bolt, etc.) for pressing the wheel hub onto the joint outer part can engage.

In order to directly protect said spur toothing against corrosion, it is proposed here to provide, radially on the outside, a flexible seal which completely surrounds the spur toothing. That is also to say, in other words, that, if appropriate, an encircling space is created between the spur toothing and the flexible seal and is bounded (partially) by the spur toothing and the flexible seal. Said space is advantageously to be kept relatively small in order to be able to design the flexible seal to likewise be small. The effect achieved by the invention, in particular, is that the spur toothing is sealed in the direct vicinity, i.e. contact with other regions of the device (with the exception of the directly adjacent regions) is consequently reliably avoided. Furthermore, it is preferred that an encircling space is equally formed on the outside around said seal, which space can serve, if appropriate, as collecting reservoir for rust particles or the like. Protection for the spur toothing can thus be provided particularly effectively and cost-effectively.

According to the invention, it is proposed that the flexible seal extends from a wheel-bearing inner ring of a wheel-bearing, which inner ring is positioned on the sleeve section of the wheel hub, as far as the joint outer part. Such a wheel-bearing is positioned in particular radially on the outside of the sleeve section of the wheel hub, with, in particular, double-row ball bearings being used here. A first row of balls is guided on the inside, for example directly on the sleeve section, while a second row of balls, which is positioned closer to the constant-velocity joint, is guided on a separate wheel-bearing inner ring which is positioned and fixed radially on the outside of the sleeve section. In this case, said wheel-bearing inner ring extends into the vicinity of that end side of the sleeve section on which the spur toothing is formed. The distance between the spur toothing of the sleeve section and the closest end surface of the wheel-bearing inner ring is preferably less than 8 mm.

With said compact design, it is therefore now proposed that the flexible seal makes contact on one side with the joint outer part and on the other side (only) with the wheel-bearing inner ring of the wheel-bearing. Although it is possible, in principle, to provide stops for said flexible seal on both components in the direction of the axis of the joint or of the device, these are preferably omitted here. The flexible seal therefore forms a contact region with the two components mentioned here, for example in the form of an encircling contact wherein the contact region is formed as a line-type contact and/or as an area-type contact. The required retaining force for permanently fixing the flexible seal in place is preferably realized here via said contact region. Though the focus here is on the specific case of making contact with the wheel-bearing inner ring, it is nevertheless equally also possible to realize a contact connection with the sleeve section itself and/or with a different subregion of the wheel-bearing.

According to one development, it is also proposed that the flexible seal is designed at least on one side with a sealing lip. That is to say, in other words, that the flexible seal can form a sealing lip toward the sleeve section and/or the wheel-bearing inner ring, on the one hand, or the joint outer part, on the other hand. The variant in which a sealing lip is realized only toward the joint outer part is preferred here. The sealing lip is in particular designed in the form of a membrane being arranged substantially oblique or perpendicular with regard to the adjacent sealing surface. Such a sealing lip is formed, for example, by a flexible ring which has an outside diameter which is larger than the seat of the flexible seal on the joint outer part and the inside diameter of which is smaller than said diameter of the seat. Therefore, said sealing lip has an important sealing function. Said sealing lip is now pulled over the joint outer part such that the sealing lip is at least partially deformed and/or even only partially (elastically) deformed and is therefore fixed in a cylindrical manner (circumferential strip-like area) on the seat of the joint outer part with a sufficient degree of prestressing. This ensures a stable fixation of the flexible seal on the outer part even in case of an uneven surface of the outer part and/or a displacement of the bearing and the outer part. The sealing lip preferably forms a contacting surface on the seat of the joint outer part of 2 to 4 mm. In addition, the sealing lip can have, radially on the outside, a receptacle for, for example, a sealing body which covers the adjacently arranged spur toothing and makes contact with the opposite components of the device. In this case it is advantageous that a stiffer sealing body (in particular made from sheet metal) keeps the sealing lip preferably at a distance of at least 2 mm away from the surface or the seat of the joint outer part. Such a sealing lip is preferably designed similar to a ring-type washer that can be elastically deformed so that an inner collar-like section is provided.

Furthermore, it is also proposed that the flexible seal forms at least on one side a form-fitting contacting surface with the wheel-bearing inner ring or the joint outer part. In principle, an arrangement is also possible, in which form-fitting contacting surfaces are formed on both sides on the wheel-bearing inner ring and the joint outer ring, but a variant is preferred, in which a form-fitting contacting surface is formed only with the wheel-bearing inner ring. Such wheel-bearing inner rings are generally already available with a relatively high degree of precision as a standard part, but may equally have positional and/or circularity tolerances because of being supported on the sleeve section in the fitted situation. In order now to obtain a sufficient sealing action here, a form-fitting supporting surface is proposed here, wherein an additional sealing compound can optionally positioned there. The supporting surface preferably has a width parallel to the axis, which width lies in the range of 1 to 5 mm.

Precisely in the situation described above, it is also considered advantageous for the wheel-bearing inner ring or the joint outer part to have a textured-surface seat for the contacting surface of the flexible seal. In particular, surfaces on the wheel-bearing inner ring and/or the joint outer part that are, for example, roughened, micro-textured, embossed, forged or the like, are suitable for this. In particular, a relatively rough surface roughness is to be provided here, for example a roughness parameter Ra at the outer part being in the range of 5 to 8 µm (micrometers), in particular circa 6,3 µm, and a roughness parameter Ra at the bearing ring being in the range of I to 2 µm, in particular circa 1,6 µm.

Furthermore, it is also considered advantageous for the flexible seal to compensate a radial offset up to 2 mm. A radial offset can be established in the fitted state of the flexible seal and relates in particular to an encircling widened portion, for example of a sealing body of sleeve-like design (elastic formation). The region indicated here firstly ensures secure fixing of the flexible seal and secondly takes into consideration the load-bearing capacity of the materials of the flexible seal for permanent use. On the other hand, it is also possible that a displacement and/or different diameters of the contacting surfaces is compensated by the flexible seal, and in particular only by the deformation of the sealing lip.

According to one development of the invention, it is also proposed that the flexible seal is designed as an annular collar. The flexible seal or the collar is preferably partly formed from rubber or a comparable elastic material and also from a stiffer material, for example sheet-metal. The term "collar" is intended in particular to express the fact that a more complex construction of the flexible seal is also possible here, for example with structures running in the circumferential direction, a multi-part construction, double-wall constructions, etc. "Annular" is intended in particular to mean here that the collar is of encircling (in particular uninterrupted) design, if appropriate in the manner of a sleeve.

The present invention is used in particular in a motor vehicle having at least one side shaft toward a wheel, wherein the side shaft and the wheel are connected to each other via a device described according to the invention. In this case, it is furthermore preferred that all of the side shafts are connected to all of the wheels of the motor vehicle via a device of this type. Furthermore, it is preferred that the device itself is designed with a fixed joint while a sliding joint is provided on the opposite side of the side shaft.

The invention and the technical environment are now illustrated in further detail with reference to the figures. The figures show particularly preferred variant embodiments of the invention but the latter is not restricted to them. Identical parts in the different figures are provided with the same reference numbers. The figures show schematically:
- figure 1:: a variant embodiment of a device according to the invention in longitudinal section,
- figure 2:: a detail from figure 1,
- figure 3:: the detail from figure 2 with the seal prior to installation, and
- figure 4:: a motor vehicle with the device.

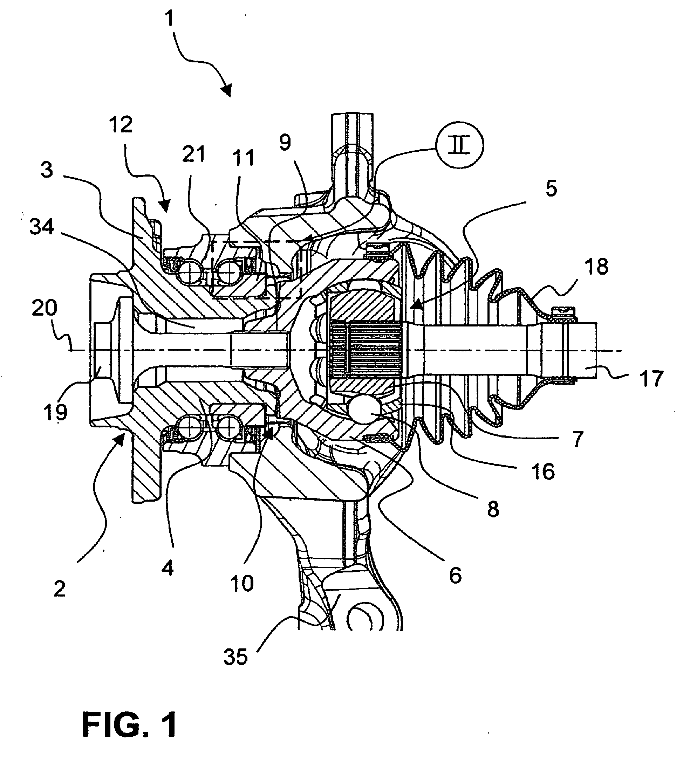

Figure 1 illustrates a first variant embodiment of the device 1 according to the invention, as fitted in a body component 35. The left-hand region of figure 1 first of all illustrates the wheel hub 2. The latter has a flange section 3 for the fastening of a wheel (not illustrated here), and a sleeve section 4 extending to the right. The wheel hub 2 has a central passage 34 for a clamping means 19 with which the wheel hub 2 is clamped against the constant-velocity rotary joint 5. In addition, a wheel-bearing 12 is provided on the outside of the sleeve section 4 and on the side of the constant-velocity rotary joint 5. The wheel-bearing 12 has two rows of balls which are arranged adjacent to each other in the direction of the axis 20, with a first row of balls being guided between the wheel-bearing outer ring 21 and the sleeve section 4 and a second row of balls, which is arranged on the side of the constant-velocity rotary joint, being guided between a wheel-bearing inner ring and the common wheel-bearing outer ring 21.

The constant-velocity rotary joint 5 is now attached further to the right in figure 1. The constant-velocity rotary joint 5 is designed with a joint outer part 6 and a joint inner part 7, between which a predetermined number of torque-transmitting elements 8 are positioned (for example, 6 balls or 8 balls), said elements being guided by means of a cage 16. The joint outer part 6 and the joint inner part 7 have tracks for the torque-transmitting elements 8, which tracks reliably ensure a transmission of torque even when the shaft 17 is bent. The shaft 17 is connected securely to the joint inner part 7 via spline toothing. This plug-in connection between shaft 17 and the constant-velocity rotary joint 5 is protected by an expansion bellows 18 which is fixed on the outside of the joint outer part 6 and the shaft 17, on the other hand.

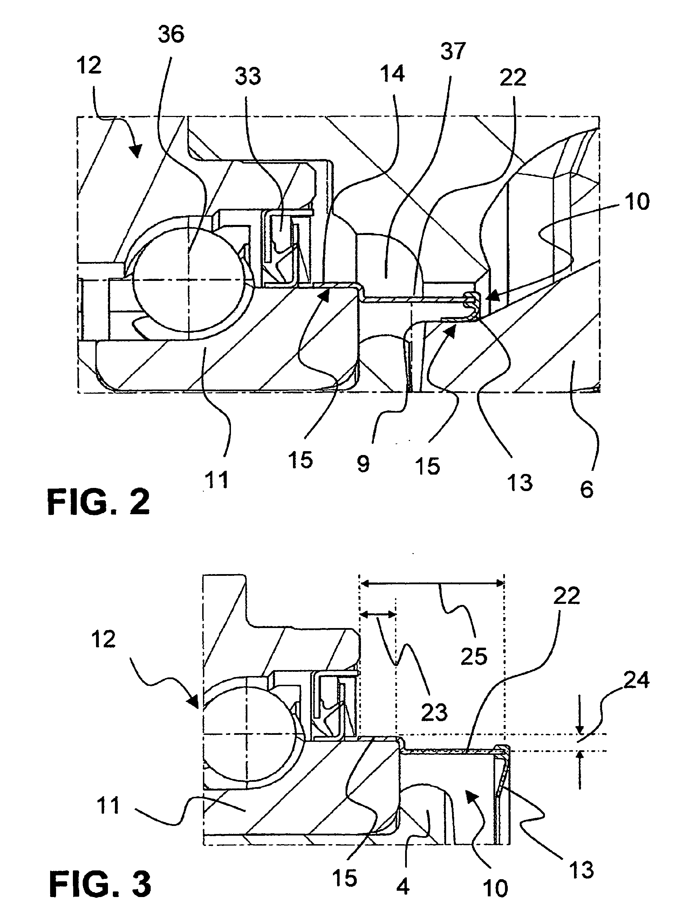

The transmission of torque from the joint outer part 6 to the wheel hub 2 takes place here via a spur toothing 9 which is formed on the contacting end surfaces of joint outer part 6 and sleeve section 4 of the wheel hub 2. Said spur toothing 9 is now protected, for example, against rust particles and other dirt by a flexible seal 10 which is of sleeve-shaped configuration and completely surrounds the spur toothing 9 radially on the outside being provided. For more detailed illustration of said seal 10, a detail is marked in figure 1 and is identified by II. This region is now illustrated on an enlarged scale in figure 2 and explained in more detail.

Figure 2 accordingly shows the correspondingly maked region from figure 1 on an enlarged scale. The joint-side row of balls 36 of the wheel-bearing 12 (referred to above as the second row of balls) together with the wheel-bearing inner ring 11 is illustrated in the left-hand region. In this case, the row of balls 36 is protected on the joint side by a wheel-bearing seal 33, with, for example, a magnetic ABS transmitter ring being integrated here. This then leads, for example, to it being possible for rust particles to accumulate to an increased extent directly in the adjacent space 37. It is precisely for this version of the wheel-bearing 12 with an integrated ABS transmitter ring that a refinement according to the invention of the device 1 is proposed. In order now to prevent said rust particles from penetrating the tolerance-sensitive spur toothing 9, a flexible seal 10 which reliably separates off the space 37 toward the wheel-bearing seal 33 is proposed.

For this purpose, the flexible seal 10 is fixed firstly on the joint outer part 6 by means of an elastic sealing lip 13. In this case, the elastic sealing lip 13 is arranged in a frictional manner on a corresponding seat 15 of the joint outer part 6 and holds a sealing body 22 which is of essentially sleeve-like design. A two-part construction of the flexible seal 10 is therefore provided here. The sealing body 22 extends through the space 37 from the sealing lip 13 to a seat 15 radially on the outside of the wheel-bearing inner ring 11 of the wheel-bearing 12. In this case, the sealing body 22 fits firmly on said seat 15 and forms an encircling contacting surface 14. The contacting surface 14 and the seat 15 of the wheel-bearing inner ring 11 are likewise preferably only connected frictionally to each other. For this purpose, the seat 15 of the wheel-bearing inner ring 11 can be designed, for example, with a particularly rough surface. In the case of the installation situation illustrated here, it is also preferred for the sealing body 22 to undergo deformation in the fitted state, with, in particular, secure fixing of the sealing body 22 on the seat 15 of the wheel-bearing inner ring 11 being ensured. The sealing body 22 is preferably widened for this purpose.

The sealing lip 13 therefore tightly butts against the outer part of the joint outer part 6 due to the elastic deformation of the (originally) disk-like shape resulting in a cylindrical contact area after the assembling.

Whereas figure 2 illustrates the fitted state of the flexible seal, figure 3 shows the state of a preassembled unit comprising wheel-bearing 12, wheel hub 2 and flexible seal 10. It can be seen here that the sealing lip 13 is not yet deformed and is designed in the manner of an annular disk extending essentially obliquely or transversely with respect to the sealing body 22. Said annular disk has a central opening into which the joint outer part can be introduced. By means of the elastic deformation of sealing lip 13, a secure grip on the joint outer part is also ensured here.

The sealing body 22 and the flexible seal 10 here have an extent 25 of, for example, at least 10 to 25 mm.

The contact region or the contacting surface 14 of the flexible seal 10 on the wheel-bearing inner ring 11 preferably has a width 23 of 1 to 5 mm. As illustrated here, the sealing body 22 engages around the wheel-bearing inner ring 11 in such a manner that a radial offset 24 is formed. The radial offset 24 is preferably 1 to 2 mm. The sealing body 22 and the sealing lip 13 may in principle be manufactured from different materials, with rubber-like materials nevertheless being preferred.

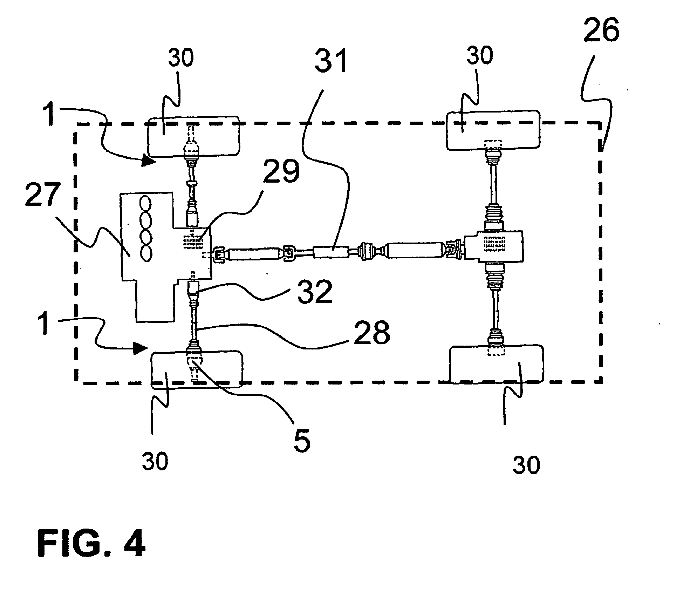

Figure 4 now illustrates a motor vehicle 26 schematically. The desired torque which is generated by means of the engine 27 and is adapted by means of the transmission 29 is passed on directly to two wheels 30 via the side shafts 28 while the other pair of wheels is connected via a longitudinal shaft 31. A side shaft 28 of this type has, for example, a sliding joint 32 toward the transmission 23 and a constant-velocity rotary joint 5 in the manner of a fixed joint on the side of the wheel 30. Here, said constant-velocity rotary joint 5 is now already part of the device I according to the invention by means of which the side shaft and the wheel interact with each other.

### List of reference numbers

- 1: Device
- 2: Wheel hub
- 3: Flange section
- 4: Sleeve section
- 5: Constant-velocity rotary joint
- 6: Joint outer part
- 7: Joint inner part
- 8: Elements
- 9: Spur toothing
- 10: Flexible seal
- 11: Wheel-bearing inner ring
- 12: Wheel-bearing
- 13: Sealing lip
- 14: Contacting surface
- 15: Seat
- 16: Cage
- 17: Shaft
- 18: Expansion bellows
- 19: Clamping means
- 20: Axis
- 21: Wheel-bearing outer ring
- 22: Sealing body
- 23: Width
- 24: Radial offset
- 25: Extent
- 26: Motor vehicle
- 27: Engine
- 28: Side shaft
- 29: Transmission
- 30: Wheel
- 31: Longitudinal shaft
- 32: Sliding joint
- 33: Wheel-bearing seal
- 34: Passage
- 35: Body component
- 36: Row of balls
- 37: Space

## Claims

1. A device (1) comprising at least one wheel hub (2) with a flange section (3) and a sleeve section (4), and a constant-velocity rotary joint (5) having at least one joint outer part (6), a joint inner part (7) and torque-transmitting elements (8), wherein the wheel hub (2) and the constant-velocity rotary joint (5) are coupled to each other via a spur toothing (9), and the spur toothing (9) is surrounded radially on the outside by a flexible seal (10), wherein the flexible seal (10) extends from a wheel-bearing inner ring (11) of a wheel-bearing (12), which inner ring is positioned on the sleeve section (4) of the wheel hub (2), as far as the joint outer part (6); wherein the flexible seal (10) comprises a sealing body (22) and a sealing lip (13), **characterized in that** the sealing body (22) extends from the sealing lip (13) to a seat (15) radially on the outside of the inner ring (11), wherein in an unassembled state the sealing lip (13) is designed as an annular disk extending essentially obliquely or transversely with respect to the sealing body (22) having a central opening into which the joint outer part (6) is introduced thereby elastically deforming the sealing lip (13) so that in an assembled state a cylindrical contact area with the joint outer part (6) is formed.

2. The device (1) as claimed in claim 1, in which the flexible seal (10) forms a form-fitting contacting surface (14) with the wheel-bearing inner ring (11) .

3. The device (1) as claimed in patent claim 1 or 2, in which the wheel-bearing inner ring (11) or the joint outer part (6) has a textured-surface seat (15) for the contacting surface (14) of the flexible seal (10).

4. The device (1) as claimed in one of the preceding patent claims, in which the flexible seal (10) compensates a radial offset (24) up to 2 millimeter.

5. The device (1) as claimed in one of the preceding patent claims, in which the flexible seal (10) is designed as an annular collar.

6. A motor vehicle (27) having at least one side shaft (28) toward a wheel (30), wherein the side shaft (28) and the wheel (30) are connected to each other via a device (1) as claimed in one of patent claims 1 to 5.

## Patentansprüche

1. Vorrichtung (1) umfassend zumindest eine Radnabe (2) mit einem Flanschabschnitt (3) und einem Hülsenabschnitt (4) sowie ein Gleichlaufdrehgelenk (5) aufweisend wenigstens ein Gelenkaußenteil (6), ein Gelenkinnenteil (7) und Drehmoment übertragende Elemente (8), wobei die Radnabe (2) und das Gleichlaufdrehgelenk (5) über eine Stirnverzahnung (9) miteinander gekoppelt sind und die Stirnverzahnung (9) radial außen von einer flexiblen Dichtung (10) umgeben ist, wobei sich die flexible Dichtung (10) von einem auf dem Hülsenabschnitt (4) der Radnabe (2) positionierten Radlagerinnenring (11) eines Radlagers (12) bis zum Gelenkaußenteil (6) erstreckt; wobei die flexible Dichtung (10) einen Dichtungskörper (22) und eine Dichtlippe (13) umfasst, **dadurch gekennzeichnet, dass** der Dichtungskörper (22) sich von der Dichtlippe (13) hin zu einem Sitz (15) radial außen auf dem Radlagerinnenring (11) erstreckt, wobei die Dichtlippe (13) im nicht montierten Zustand nach Art einer sich im Wesentlichen schräg oder quer zum Dichtungskörper (22) erstreckende Ringscheibe ausgebildet ist und eine zentrale Öffnung aufweist, in die das Gelenkaußenteil (6) eingeführt und somit die Dichtlippe (13) elastisch verformt wird, so dass im montierten Zustand eine zylindrische Anlagefläche mit dem Gelenkaußenteil (6) gebildet ist.

2. Vorrichtung (1) nach Patentanspruch 1, bei der die flexible Dichtung (10) eine formschlüssige Anlagefläche (14) mit dem Radlagerinnenring (11) bildet.

3. Vorrichtung (1) nach Patentanspruch 1 oder 2, bei der der Radlagerinnenring (11) oder das Gelenkaußenteil (6) einen oberflächenstrukturierten Sitz (15) für die Anlagefläche (14) der flexiblen Dichtung (10) aufweist.

4. Vorrichtung (1) nach einem der vorhergehenden Patentansprüche, bei der die flexible Dichtung (10) einen Radialversatz (24) von bis zu 2 Millimetern kompensiert.

5. Vorrichtung (1) nach einem der vorhergehenden Patentansprüche, bei der die flexible Dichtung (10) als ringförmige Manschette ausgeführt ist.

6. Kraftfahrzeug (27) aufweisend zumindest eine Seitenwelle (28) hin zu einem Rad (30), wobei die Seitenwelle (28) und das Rad (30) über eine Vorrichtung (1) gemäß einem der Patentansprüche 1 bis 5 miteinander verbunden sind.

## Revendications

1. Un dispositif (1) comprenant au moins un moyeu de roue (2) avec une section de bride (3) et une section de douille (4), ainsi qu'un joint rotatif à vitesse constante (5) qui a au moins une partie extérieure de joint (6), une partie intérieure de joint (7) et des éléments de transmission de couple (8), le moyeu de roue (2) et le joint rotatif à vitesse constante (5) étant accouplés l'un à l'autre à l'intermédiaire d'une denture droite (9) et la denture droite (9) étant entourée radialement par un joint flexible (10) sur l'extérieur, le joint flexible (10) s'étendant à partir d'une bague intérieure de roulement de roue (11) d'un roulement (12), laquelle bague intérieure est agencée sur la section de douille (4) du moyeu de roue (2), jusqu'à la partie extérieure de joint (6); le joint flexible (10) comprenant un corps d'étanchéité (22) et une lèvre d'étanchéité (13), **caractérisé en ce que** le corps d'étanchéité (22) s'étend depuis la lèvre d'étanchéité (13) jusqu'à un logement (15) radialement sur l'extérieur de la bague intérieure (11), dans un état non assemblé la lèvre d'étanchéité (13) étant réalisée comme disque annulaire s'étendant essentiellement de façon oblique ou transversale par rapport au corps d'étanchéité (22) qui a une ouverture centrale, dans laquelle la partie extérieure de joint (6) est introduite en même temps en déformant de façon élastique la lèvre d'étanchéité (13), de sorte que dans un état assemblé une zone de contact cylindrique avec une partie extérieure de joint (6) est formée.

2. Dispositif (1) selon la revendication 1, dans lequel le joint flexible (10) forme une surface d'application par coopération de formes (14) avec la bague intérieure de roulement.

3. Dispositif (1) selon la revendication 1 ou 2, dans lequel la bague intérieure de roulement de roue (11) ou la partie extérieure de joint (6) a un logement de surface texturée (15) pour la surface d'application (14) du joint flexible (10).

4. Dispositif (1) selon l'une des revendications précédentes, dans lequel le joint flexible (10) compense un déport radial (24) de jusqu'à 2 millimètres.

5. Dispositif (1) selon l'une des revendications précédentes, dans le cas duquel le joint flexible (10) est réalisé comme manchette annulaire.

6. Véhicule automobile (27) comportant au moins un arbre latéral (28) vers une roue (30), l'arbre latéral (28) et la roue (30) étant connectés l'un à l'autre à l'intermédiaire d'un dispositif (1) selon l'une des revendications 1 à 5.
